# EUROPEAN PATENT APPLICATION

(11) **EP 2 784 960 A1**
(43) Date of publication of application: **01.10.2014**
(21) Application number: 13305375.1
(22) Date of filing: 27.03.2013
(51) Int. Cl.: H04J 14/02

(54) **Optical transmitter for a WDM network**

(71) Applicant: ALCATEL LUCENT, 92100 Boulogne-Billancourt (FR)
(72) Inventor: Galli, Paola, 25030 Adro BS (IT)
(74) Representative: Pietra, Giulia

(57) **Abstract**

It is disclosed an optical transmitter comprising first and second mirrors, an optical amplifier and a wavelength mux/demux. The mux/demux comprises a number of user ports, a line port and a cavity port. The mux/demux is configured to multiplex optical signals received through the user ports onto both the line port and the cavity port. In the mux/demux, the cavity port is optically connected to the second mirror, while one of the user ports is optically connected to optical amplifier and first mirror, thereby forming a laser cavity delimited by the first and second mirrors and including optical amplifier and mux/demux. The mux/demux has a cavity transfer function between user port and cavity port, and a line transfer function between user port and line port. The mux/demux is configured such that cavity transfer function differs from line transfer function by at least one feature including: shape, bandwidth and central wavelength.

## Description

### Technical field

The present invention generally relates to the field of optical networks. In particular, the present invention relates to an optical transmitter for a WDM (Wavelength Division Multiplexing) network, and to a WDM network (e.g. a WDM PON or a WDM ring) comprising such an optical transmitter.

### Background art

As it is known, in a Wavelength Division Multiplexing (WDM) network different user signals are carried by different wavelengths, which are multiplexed and transmitted over a same physical medium, namely an optical fiber.

For instance, a WDM passive optical network (briefly termed PON) is a type of access network, i.e. a network allowing a plurality of users to be connected to a node of a core network (for instance, a metropolitan area network). A WDM PON typically comprises an optical line termination (briefly termed OLT) located at a central office (in brief, CO) of the service provider and a number of optical network units (briefly termed ONU). Depending on the applications, an ONU may be located within the user's home (FTTH - Fiber To The Home), at the basement of a building (FTTB - Fiber To The Building) or at the curb in the proximity of one or more buildings (FTTC - Fiber To The Curb).

Each ONU may communicate with the OLT by using a respective couple of wavelengths, comprising an upstream wavelength (which the ONU uses for transmission to the OLT) and a downstream wavelength (which the OLT uses for transmission to the ONU). The upstream wavelengths may be for instance located in the so-called C band (1530 nm - 1565 nm), whereas the downstream wavelengths may be for instance located in the so-called L band (>1565 nm).

A WDM PON also typically comprises a so-called "remote node", a feeder optical fiber (briefly, feeder fiber) connecting the remote node to the OLT and a number of distribution optical fibers (briefly, distribution fibers) radiating from the remote node. Each distribution fiber may be terminated at its far end by an ONU or by a power splitter connecting the distribution fiber with multiple ONUs via multiple drop optical fibers (briefly, drop fibers). The feeder fiber has a length typically ranging from about 5 km to about 40 km. The distribution fibers typically have a length ranging from some meters to a few kilometers, depending on the environment (metropolitan or rural) and on the application (FTTH, FTTB or FTTC). The remote node is typically a passive node, i.e. it comprises only passive components (typically AWGs, couplers, etc.) that do not need power supply.

In the downstream direction, the OLT generates downstream optical signals (briefly, downstream signals) at the downstream wavelengths associated to the ONUs, multiplexes them according to the known WDM technique and transmits them to the remote node along the feeder fiber. At the remote node, the downstream signals are demultiplexed and each of them is forwarded to a respective ONU along a respective distribution fiber.

In the upstream direction, each ONU generates a respective upstream signal at the upstream wavelength associated thereto and transmits it along the respective distribution fiber to the remote node. The remote node multiplexes all the upstream signals received from the various ONUs according to the known WDM technique, and forwards them to the OLT through the feeder fiber. At the OLT, the upstream signals are demultiplexed and subjected to subsequent processing.

Hence, each ONU comprises a transmitter capable of transmitting at the upstream wavelength assigned thereto. To minimize both manufacturing and inventory costs of the ONUs, it is known providing all the ONUs with a same type of transmitter which is "colorless", i.e. which in principle may transmit optical signals over a wide range of wavelengths, and that may be optically tuned by the WDM PON itself on the proper upstream wavelength assigned to the ONU, when the ONU is connected to the far end of a distribution fiber.

EP 2 408 125, in the name of the same Applicant, discloses a colorless transmitter for a WDM PON which comprises a modulator, an optical amplifier and a first mirror. The functions of such components are preferably integrated in a Reflective Semiconductor Optical Amplifier (RSOA) located at the ONU. The transmitter further comprises a mux/demux and a second mirror, both located at the remote node. The mux/demux comprises an AWG (Arrayed Waveguide Grating) having a line port, a cavity port and n user ports (one for each distribution fiber). The line port is connected to the feeder fiber, while the cavity port is connected to the second mirror. The m^{th} diffraction order (m being an integer number) of the optical signals entering the mux/demux through its user ports focuses at the line port of the mux/demux and is transmitted upstream to the feeder fiber. The (m+k)^{th} or (m-k)^{th} diffraction order (k being an integer equal to or higher than 1, preferably equal to 1) of such signals instead focuses at the cavity port, where it is back-reflected by the second mirror. Hence, a cavity is advantageously formed, which is delimited by the first and second mirrors and which emits a coherent optical radiation in the upstream direction at its output at the line port of the mux/demux. At the cavity steady state, the emission wavelength of the cavity (and therefore of the transmitter) is determined by the mux/demux transfer functions.

### Summary of the invention

The inventors have perceived the need to improve the colorless transmitter of EP 2 408 125.

In particular, the inventors have perceived the need to provide a colorless transmitter for a WDM network (e.g. for a WDM ring or a WDM PON, similarly to the colorless transmitter of EP 2 408 125) particularly suitable for transmission at bit rates up to 10 Gbit/s or more over an optical fiber with a length of few tens of kilometers.

According to a first aspect thereof, the present invention provides an optical transmitter comprising:
- a first mirror and a second mirror;
- an optical amplifier; and
- a wavelength multiplexer/demultiplexer comprising a number n of first user ports, a line port and a cavity port, the wavelength multiplexer/demultiplexer being configured to multiplex first optical signals received through the n first user ports onto the line port and onto the cavity port, the cavity port being optically connected to the second mirror, a first user port of the number n of first user ports being optically connected to the optical amplifier and the first mirror so as to form a laser cavity delimited by the first mirror and the second mirror and including the optical amplifier and the wavelength multiplexer/demultiplexer, wherein the wavelength multiplexer/demultiplexer has a cavity transfer function between the first user port and the cavity port and a line transfer function between the first user port and the line port,
wherein the wavelength multiplexer/demultiplexer is configured such that the cavity transfer function differs from the line transfer function by at least one spectral feature.

Preferably, the cavity transfer function comprises a cavity passing band and the line transfer function comprises a line passing band, and the at least one spectral feature comprises one or more of:
- passing band shape;
- passing band bandwidth; and
- passing band central wavelength.

Preferably, the line passing band has a shape steeper than the cavity passing band.

According to particularly preferred embodiments, the line passing band has a raised-cosine shape and the cavity passing band has a Gaussian shape.

Preferably, the line passing band and the cavity passing band are reciprocally shifted.

More preferably, the line passing band is red-shifted relative to the cavity passing band.

According to preferred variants, the wavelength multiplexer/demultiplexer further comprises n second user ports, the wavelength multiplexer/demultiplexer being configured to demultiplex second optical signals received through the line port onto the n second user ports, a second user port of the number n of second user ports being associated to the first user port, wherein the wavelength multiplexer/demultiplexer has a further transfer function between the line port and the second user port, wherein the wavelength multiplexer/demultiplexer is configured such that the line transfer function differs from the further transfer function by at least one spectral feature.

Preferably, the wavelength multiplexer/demultiplexer comprises an arrayed waveguide grating.

Preferably, the arrayed waveguide grating is configured so that a first and second diffraction orders of a first optical signal at a wavelength entering the wavelength multiplexer/demultiplexer through the first user port are focused at the line port and the cavity port, respectively.

Alternatively, the wavelength multiplexer/demultiplexer comprises a thin film filter.

Preferably, the second mirror and the wavelength multiplexer/demultiplexer are integrated in a same optical device.

More preferably, also the first mirror and the optical amplifier are integrated within a same further optical device.

According to a second aspect, the present invention provides a wavelength multiplexer/demultiplexer comprising a number n of first user ports, a line port and a cavity port, the wavelength multiplexer/demultiplexer being configured to multiplex first optical signals received through the n first user ports onto the line port and onto the cavity port, wherein the wavelength multiplexer/demultiplexer has a cavity transfer function between a first user port of the number n of first user ports and the cavity port, and a line transfer function between the first user port and the line port, wherein the wavelength multiplexer/demultiplexer is configured such that the cavity transfer function differs from the line transfer function by at least one spectral feature.

According to a third aspect, the present invention provides a wavelength division multiplexing network comprising an optical transmitter as set forth above.

According to a fourth aspect, the present invention provides a wavelength division multiplexing network comprising a wavelength multiplexer/demultiplexer as set forth above.

### Brief description of the drawings

The present invention will become clearer by reading the following detailed description, given by way of example and not of limitation, to be read by referring to the accompanying drawings, wherein:
- Figure 1 shows a WDM PON according to an embodiment of the present invention;
- Figure 2 shows a portion of the WDM PON of Figure 1;
- Figure 3 shows upstream and downstream wavelengths assigned to the ONUs of the WDM PON of Figure 1; and
- Figures 4a, 4b and 4c show the passing bands of the mux/demux comprised in the WDM PON of Figure 3, according to three different variants.

### Detailed description of preferred embodiments of the invention

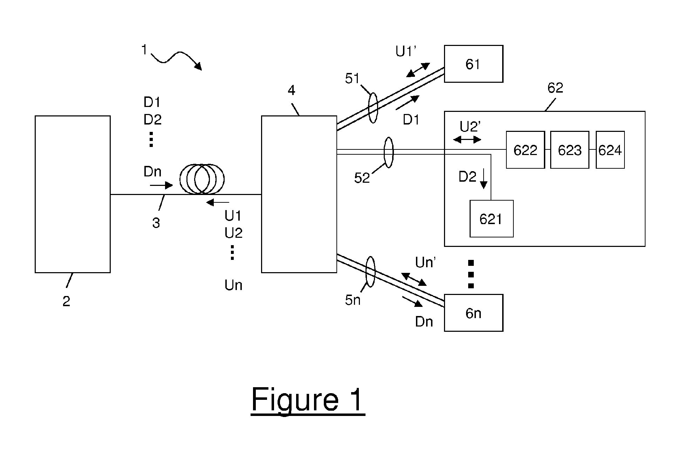

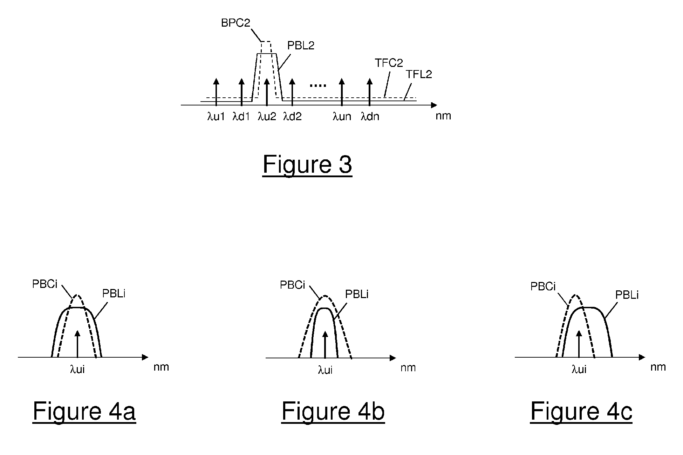

Figure 1 schematically shows a WDM PON 1 comprising a number n of ONUs 61, 62, ... 6n. The number n is an integer equal to or higher than 2, such as for instance 4, 8, 16, 32, etc. Preferably, each ONU 61, 62, ... 6n has assigned a respective upstream wavelength λu1, λu2, ... λun and a respective downstream wavelength λd1, λd2, ... λdn for communicating with the OLT 2. The upstream wavelengths λu1, λu2, ... λun and the downstream wavelengths λd1, λd2, ... λdn are preferably assigned by the service provider providing FTTH, FFTB or FTTC services to users through the WDM PON 1. According to the first embodiment, the upstream wavelengths λu1, λu2, ... λun and downstream wavelengths λd1, λd2, ... λdn are reciprocally interleaved, the upstream wavelength λui and downstream wavelength λdi assigned to a same ONU 6i being adjacent (see Figure 3). The upstream and downstream wavelengths are preferably spaced by a predefined channel spacing (for instance, about 0.8 nm).

The WDM PON 1 also comprised an OLT 2, a feeder fiber 3, a remote node 4 and a number n of pairs of distribution fibers 51, 52, ... 5n.

The OLT 2 is preferably connected to the remote node 4 by means of the feeder fiber 3. In turn, the remote node 4 is connected to each ONU 61, 62, ... 6n by means of a respective pair of distribution fibers 51, 52, ... 5n.

The feeder fiber 3 preferably has a length comprised between about 5 km and about 40 km. Preferably, each distribution fiber 51, 52, ... 5n has a length comprised between some meters and a few kilometers. Preferably, the feeder fiber 3 and the distribution fibers 51, 52, ... 5n are standard single-mode ITU-T G.652-compliant optical fibers.

All the ONUs 61, 62, ... 6n preferably have substantially the same structure. Then, in Figure 1 only the structure of the ONU 62 is shown in detail. The ONU 62 preferably comprises a receiver 621, a modulator 622, an optical amplifier 623 and a first mirror 624.

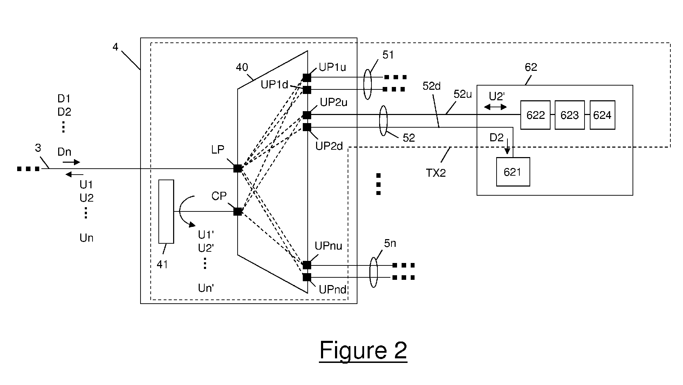

The receiver 621 may be any known optical receiver, such as for instance a PiN diode or an APD (Avalanche Photo-Diode). The receiver 621 is preferably connected to one of the two distribution fibers 52 (also termed herein after "downstream fiber" and indicated by reference numeral 52d in Figure 2).

The modulator 622 preferably is an amplitude modulator. The modulator 622 is preferably connected to the other distribution fiber 52 (also termed herein after "upstream fiber" and indicated by reference numeral 52u in Figure 2).

The optical amplifier 623 preferably comprises an optical component suitable for amplifying an optical signal propagating therethrough. Preferably, the optical amplifier 623 exhibits a high saturated gain, in particular low input saturation power and high output saturated power.

The modulator 622 and the optical amplifier 623 may be separated components. In this case, the optical amplifier 623 may comprise for instance an erbium-doped fiber amplifier (EDFA), while the modulator 622 may comprise for instance a Mach-Zehnder modulator (e.g. electro-optical or acousto-optic). Preferably, the modulator 622 and the optical amplifier 623 are integrated in a same component comprising a gain medium suitable for varying its gain according to a driving signal (e.g. an electrical signal), thereby providing at its output an amplitude-modulated optical signal. An exemplary component of this type is a SOA (Semiconductor Optical Amplifier). According to such advantageous embodiments, the ONU 62 further comprises an electronic circuit (not shown in Figure 1) suitable for providing a driving signal to the modulator 622/optical amplifier 623.

The first mirror 624 is preferably suitable for reflecting optical signals in the wavelength range used for communications between the OLT 2 and the ONU 62. According to advantageous embodiments of the present invention, the first mirror 624 is integral with the optical amplifier 623 and/or with the modulator 622, so as to form a single component. According to particularly advantageous embodiments, the modulator 622, the optical amplifier 623 and the first mirror 624 are implemented in a single component, such as a Reflective SOA (or, briefly, RSOA). The RSOA may be for instance a C-band RSOA.

The remote node 4 preferably comprises a wavelength multiplexer/demultiplexer (briefly termed herein after "mux/demux") 40 and a second mirror 41.

The mux/demux 40 preferably has a first network-side port LP (also termed "line port" in the following description), a second network-side port CP (also termed "cavity port" in the following description), n first user-side ports UP1u, UP2u, ... UPnu (also termed "user upstream ports" in the following description) and n second user-side ports UP1d, UP2d, ... UPnd (also termed "user downstream ports" in the following description). The line port LP is preferably connected to the feeder fiber 3, the cavity port CP is preferably connected to the second mirror 41, each user upstream port UP1u, UP2u, ... UPnu is preferably connected to a respective upstream fiber 51 u, 52u, ... 5nu and each user downstream port UP1d, UP2d, ... UPnd is preferably connected to a respective downstream fiber 51 d, 52d, ... 5nd.

The mux/demux 40 preferably has - for each user upstream port UPiu (i=1, 2, ... n) - a respective line transfer function TFLi between that user upstream port UPiu and the line port LP. The line transfer function TFLi has a passing band BPLi including the upstream wavelength λui assigned to the ONU 6i connected to the remote node 4 through that user upstream port UPiu. Figure 3 shows (solid line), by way of example, the line transfer function TFL2 between the user upstream port UP2u and the line port LP, having a passing band BPL2 at the upstream wavelength λu2 assigned to the ONU 62.

The mux/demux 40 also preferably has - for each user upstream port UPiu (i=1, 2, ... n) - a respective cavity transfer function TFCi between that user upstream port UPiu and the cavity port CP. The cavity transfer function TFCi has a passing band BPCi including the upstream wavelength λui assigned to the ONU 6i connected to the remote node 4 through that user upstream port UPiu. Figure 3 shows (dashed line), by way of example, the cavity transfer function TFC2 between the user upstream port UP2u and the cavity port CP, having a passing band BPC2 at the upstream wavelength λu2 assigned to the ONU 62.

Preferably, the mux/demux 40 is an AWG (Arrayed Waveguide Grating), more preferably an athermal AWG. In order to provide line transfer functions TFLi with respective passing bands BPLi at the upstream wavelengths λui, according to the first embodiment the AWG is preferably designed so that, for each user upstream port UPiu, an m^{th} diffraction order (m being an integer number) of an optical signal entering the mux/demux 40 through that user upstream port UPiu and having wavelength equal to the upstream wavelength λui focuses at the line port LP. Besides, in order to provide cavity transfer functions TFCi with respective passing bands PBCi at the upstream wavelengths λui, according to the first embodiment the AWG is preferably designed so that, for each user upstream port UPiu, an (m+k)^{th} or (m-k)^{th} diffraction order (k being an integer equal to or higher than 1, preferably equal to 1) of an optical signal entering the mux/demux 40 through that user upstream port UPiu and having wavelength equal to the upstream wavelength λui focuses at the cavity port CP. Alternatively, the mux/demux 40 may be implemented through one or more TFF (Thin Film Filter).

The second mirror 41 may have a reflectivity substantially constant over a range including the upstream wavelengths λu1, λu2, ... λun and downstream wavelengths λd1, λd2, ... λdn. For instance, the second mirror 41 may comprise a metallic coating. Alternatively, the reflectivity of the second mirror 41 may vary versus wavelength. This wavelength-dependent behavior may be obtained for instance by means of a thin-film filter incorporated in the second mirror 41. The second mirror 41 may be a Faraday Rotating Mirror (FRM).

According to particularly advantageous embodiments, the mux/demux 40 and the second mirror 41 are implemented as a single integrated optical component (e.g. an AWG whose cavity port CP is metallized).

Hence, in the WDM PON 1 of Figure 1 n cavities are advantageously formed, one for each ONU 61, 62, ... 6n. In particular, by referring for instance to the ONU 62, its associated cavity is delimited at its ends by the first mirror 624 and the second mirror 41, and comprises: the optical amplifier 623, the modulator 622, the upstream fiber 52u and the mux/demux 40 (in particular, the diffraction path joining the user upstream port UP2u and the cavity port CP).

The reflectivity of the first mirror 624, the gain of the optical amplifier 623 and the reflectivity of the second mirror 41 are selected so that, at the upstream wavelength λu2, the cavity has a loop gain higher than 1. This advantageously triggers a positive feedback mechanism in the cavity. At the cavity steady-state, a steady-state radiation is then generated within the cavity, whose wavelength is selected by the cavity transfer function TFC2 of the mux/demux 40 (in particular, its passing band BPC2 at the upstream wavelength λu2). The cavity then emits a coherent optical radiation in the upstream direction at its output, which is the line port LP of the mux/demux 40. Such coherent optical radiation is therefore filtered also by the line transfer function TFL2 of the mux/demux 40 (namely, by its passing band BPL2 at the upstream wavelength λu2). In other words, the cavity acts as an upstream coherent transmitter TX2 which incorporates a double filtering of the emitted radiation, namely a cavity filtering by the cavity transfer function TFC2 and a line filtering by the line transfer function TFL2.

Herein after, the operation of the WDM PON 1 according to such first embodiment of the present invention will be described in detail.

By referring first to the downstream direction, the OLT 2 generates downstream signals D1, D2, ... Dn at the downstream wavelengths λd1, λd2, ... λdn, multiplexes them according to the known WDM technique and transmits them to the remote node 4 along the feeder fiber 3. At the remote node 4, the downstream signals D1, D2, ... Dn enter the mux/demux 40 through its line port LP. Within the mux/demux 40, the downstream signals D1, D2, ... Dn are demultiplexed and each of them exits the mux/demux 40 (and then the remote node 4) through a respective user downstream port UP1d, UP2d, ... UPnd. Each downstream signal D1, D2, ... Dn then propagates along the respective downstream fiber 51 d, 52d, ... 5nd, until it reaches the ONU 61, 62, ... 6n. In particular, at the ONU 62, the downstream signal D2 is received by the receiver 621, which preferably converts the downstream signal D2 into a corresponding electrical signal and forwards it to electrical circuits (not shown in Figure 1) of the ONU 62 for further processing.

In the upstream direction, as described above, a cavity steady-state radiation is set up in the cavity delimited by the first mirror 624 and second mirror 41, whose wavelength is basically selected by the cavity transfer function TFC2 of the mux/demux 40. At the ONU 62 the modulator 622 preferably superimposes an amplitude modulation to such cavity steady-state radiation, thereby generating a cavity signal U2' at the same wavelength. Such an amplitude modulation basically is a perturbation to the steady state of the cavity. The cavity signal U2' is preferably forwarded to the remote node 4 along upstream fiber 52u.

Preferably, when the cavity signals U1', U2', ... Un' generated at the ONUs 61, 62, ... 6n reach the remote node 4 through the upstream fibers 51 u, 52u, ... 5nu, they enter the mux/demux 40 through the user upstream ports UP1u, UP2u, ... UPnu.

Within the mux/demux 40, the cavity signals U1', U2', ... Un' are multiplexed and forwarded to the line port LP, so that corresponding upstream signals U1, U2, ... Un are output by the mux/demux 40 through the line port LP. The line port LP therefore basically is the common output of the cavities/transmitters of all the ONUs 61, 62, ... 6n. The multiplexed upstream signals U1, U2, ... Un are fed to the OLT 2 through the feeder fiber 3.

At the same time, the cavity signals U1', U2', ... Un' are multiplexed and forwarded to the cavity port CP of the mux/demux 40, where they are reflected by the second mirror 41 and enter again the mux/demux 40 through the cavity port CP. Within the mux/demux 40, the cavity signals U1', U2', ... Un' are demultiplexed, so that each of them exits the mux/demux 40 (and then the remote node 4) through the respective user upstream port UP1u, UP2u, ... UPnu. The cavity signals U1', U2', ... Un' are then fed back in the downstream direction from the remote node 4 to the ONUs 61, 62, ... 6n along the upstream fibers 51 u, 52u, ... 5nu. In particular, at the ONU 62, the cavity signal U2' passes through the modulator 622 and the optical amplifier 623, and is reflected back onto the first mirror 624.

According to the present invention, the mux/demux 40 is designed so that, for each user upstream port UPiu, the cavity transfer function TFCi and the line transfer function TFLi are different. In particular, the mux/demux 40 is preferably designed so that the passing band PBCi at the upstream wavelength λui of the cavity transfer function TFCi (also termed herein after "cavity passing band") and the passing band BPLi at the upstream wavelength λui of the line transfer function TFLi (also termed herein after "line passing band") associated to a same user upstream port UPiu differ by at least one feature, the at least one feature including one or more of:
- shape of the passing band (e.g. Gaussian, raised-cosine, etc.);
- bandwidth of the passing band (measured e.g. in terms of FWHM, Full Width Half Maximum); and
- central wavelength of the passing band (measured e.g. in terms of offset relative to the nominal upstream wavelength λui).

The inventor has indeed realized that the cavity passing band PBCi and the line passing band PBLi associated to the same user upstream port UPiu play different roles in the generation of the upstream signal Ui and that, accordingly, their optimal features in view of such different roles are different.

As to the cavity passing band PBCi, its optimal features are preferably those which provide an optimum trade-off between the RIN (Relative Intensity Noise) affecting the upstream signal Ui and the chromatic dispersion penalty cumulated by the upstream signal Ui during its propagation along the feeder fiber 3 given by Ui signal spectral width. Indeed, when a SOA is used as optical amplifier at the ONU 6i, the RIN affecting the upstream signal Ui increases as the cavity passing band PBCi becomes narrow and steep. Hence, a large and smooth cavity passing band PBCi is desired for lowering RIN on the upstream signal Ui. On the other hand, the larger the cavity passing band PBCi, the higher is the chromatic dispersion penalty that the upstream signal Ui will cumulate during its propagation along the feeder fiber 3. The cumulated chromatic dispersion penalty however depends also on the length of the feeder fiber 3 (in particular it typically increases as the fiber length increases). Therefore, in case the feeder fiber 3 is short (up to few kilometers), the mux/demux 40 is preferably designed so that the cavity passing band BPCi is larger, because in such case the chromatic dispersion is not the major issue, and accordingly the cavity passing band BPCi may be optimized for minimizing RIN. On the other hand, if the feeder fiber 3 is longer (more than few kilometers), the mux/demux 40 is preferably designed so that cavity passing band PBCi is narrower, in order to control the chromatic dispersion penalty that the upstream signal Ui will cumulate during propagation along the feeder fiber 3. In this latter case, RIN affecting the upstream signal Ui will necessarily be higher than in the first case. In both cases (shorter vs longer feeder fiber 3), the mux/demux 40 is preferably designed so that the cavity passing band BPCi has a smooth shape (e.g. a Gaussian shape) which, as mentioned above, provides a reduction of RIN.

As to the line passing band PBLi, its optimal features are preferably those which provide an optimum trade-off between the RIN affecting the upstream signal Ui and the crosstalk on the downstream signal Di generated by adjacent downstream signal(s). Indeed, when a SOA is used as optical amplifier at the ONU 6i, the RIN affecting the upstream signal Ui increases also as the line passing band PBLi becomes narrow and steep. Hence, a large and smooth line passing band PBLi is desired for lowering RIN on the upstream signal Ui. On the other hand, the larger the line passing band PBLi, the higher is the crosstalk on the downstream signal Di. Indeed, as explained above, the mux/demux 40 performs a demultiplexing of the downstream signals D1, D2, ... Dn transmitted by the OLT 2. For each downstream signal Di, the crosstalk from adjacent downstream signal(s) generated during demultiplexing mainly depends on shape and bandwidth of the passing band at the downstream wavelength λdi of the transfer function between line port LP and user downstream port UPid. The latter passing band may have however the same shape and bandwidth as the line passing band PBLi of the line transfer function TFLi associated to the corresponding user upstream port UPiu]. Hence, designing the mux/demux 40 so as to provide a large and smooth line passing band BPLi is preferred for lowering the RIN affecting the upstream signal Ui, as explained above. However, when a large and smooth line passing band BPLi is provided, also the passing band at the downstream wavelength λdi may be equally large and smooth, which is detrimental from the point of view of crosstalk on the downstream signal Di. Therefore, in case the spacing between adjacent upstream wavelengths λui (which is typically equal also to the spacing between adjacent downstream wavelengths λdi) is large, the mux/demux 40 is preferably designed so that the line passing band BPLi is large, because in such case crosstalk on the downstream signal Di is not the major issue, and accordingly the line passing band BPLi may be optimized for minimizing RIN on the upstream signal Ui. On the other hand, if the spacing between adjacent upstream wavelengths λui (which is typically equal also to the spacing between adjacent downstream wavelengths λdi) is smaller, the mux/demux 40 is preferably designed so that the line passing band BPLi is narrower, in order to control the crosstalk on the downstream signal Di. **In** this latter case, RIN affecting the upstream signal Ui will necessarily be higher than in the first case. In both cases (narrower vs larger channel spacing), the mux/demux 40 is preferably designed so that the line passing band BPLi has a steep shape (e.g. a raised-cosine shape) which provides a reduction of the crosstalk. According to other embodiments, the mux/demux 40 is designed so that the transfer function between line port LP and user downstream port UPid is different from the transfer function TFLi between line port LP and user upstream port UPiu. This advantageously allows optimizing crosstalk on the downstream signal Di without affecting RIN on the upstream signal Ui'.

Figure 4a shows the cavity passing band PBCi and the line passing band BPLi associated to a user upstream port UPiu of the mux/demux 40, in a first exemplary scenario where the feeder fiber 3 is long (10 km or more) and the channel spacing is large (e.g. 200 GHz or more). In this scenario, the cavity passing band PBCi is narrower than the line passing band PBLi. A narrow cavity passing band PBCi is indeed desired for controlling the chromatic dispersion penalty that the upstream signal Ui will cumulate during its propagation over the feeder fiber 3. On the other hand, the large channel spacing allows a large line passing band PBLi, since crosstalk in the downstream direction is not critical. Hence, the line passing band PBLi advantageously does not contribute to the RIN affecting the upstream signal Ui, which is instead mainly due to the cavity passing band PBCi. It shall be further noticed that, while the cavity passing band PBCi has a smooth shape (namely a Gaussian shape) for reducing RIN, the line passing band PBLi has a steep shape (namely a raised-cosine shape) for reducing crosstalk.

Figure 4b shows the cavity passing band PBCi and the line passing band BPLi associated to a user upstream port UPiu of the mux/demux 40, in a second exemplary scenario where the feeder fiber 3 is short (less than 10 km) and the channel spacing is narrow (e.g. up to 100 GHz). In this scenario, the cavity passing band PBCi is larger than the line passing band PBLi. A narrow line passing band PBLi is indeed needed for controlling the crosstalk that demultiplexing at the mux/demux 40 will induce over the downstream signal Di. On the other hand, the short feeder fiber 3 allows a large cavity passing band PBCi, since the chromatic dispersion penalty that the upstream signal Ui will cumulate during propagation over the feeder fiber 3 is not critical. Hence, the cavity passing band PBCi advantageously does not contribute to the RIN affecting the upstream signal Ui, which is instead mainly due to the line passing band PBLi. It shall be further noticed that, while the cavity passing band PBCi has a smooth shape (namely a Gaussian shape) for reducing RIN, the line passing band PBLi has a steep shape (namely a raised-cosine shape) for reducing crosstalk.

Hence, advantageously, the cavity passing band PBCi and the line passing band BPLi may be optimized individually based on the above criteria, depending on the scenario (in particular, length of feeder fiber 3 and channel spacing). This allows optimizing the features of the upstream signal Ui for each particular scenario and then allows reaching very high bitrates (10 Gbps or more) over feeder fibers of 10 km or more. Such performance may be advantageously reached without requiring any electronic equalization at the receiver side (namely, at the OLT 2) for compensating the chromatic dispersion effects. This is advantageous in that circuits for electronic compensation are typically complex, expensive and have high power consumption.

The inventor has noticed that the double filtering of the upstream signal Ui carried out within the mux/demux 40 by the cavity passing band PBCi and the line passing band PBLi has a further advantage. Indeed, when a SOA is used as optical amplifier at the ONU 6i, nonlinear effects occurring within the SOA induce a red-shift of the spectrum of the cavity signal Ui' relative to the cavity passing band PBCi. Hence, if the cavity passing band PBCi is centered at the nominal upstream wavelength λui, the spectrum of the cavity signal Ui' is centered at a wavelength longer than the nominal λui. According to a preferred variant of the present invention, the cavity passing band PBCi and the line passing band PBLi are reciprocally shifted. More preferably, the line passing band PBLi is shifted towards longer wavelengths relative to the cavity passing band PBCi, as shown in Figure 4c. Even more preferably, the line passing band PBLi is preferably shifted relative to the cavity passing band PBCi by an amount substantially equal to the above mentioned red-shift. This allows minimizing the power loss due to the line filtering, since the line passing band PBLi is substantially aligned with the red-shifted spectrum of the cavity signal Ui'. According to other embodiments, the reciprocal shift between line passing band PBLi and cavity passing band PBCi is different from (e.g. larger than) the above red-shift. This induces a misalignment between the line passing band PBLi and the red-shifted spectrum of the cavity signal Ui'. Due to such misalignment, as the line passing band PBLi filters the cavity signal Ui', the spectrum of the upstream signal Ui at the line port LP of the mux/demux 40 becomes narrower than the spectrum of the cavity signal Ui'. This advantageously results in a reduction of chromatic dispersion penalty cumulated by the upstream signal Ui during its propagation along the feeder fiber 3 (and, possibly, a reduction of crosstalk induced by demultiplexing on the downstream signal Di), without increasing the RIN affecting the upstream signal.

In order to provide cavity passing bands PBCi and line passing bands PBLi with the desired features (bandwidth, shape and central wavelengths), known design criteria for AWGs are applied (design and position of tapers of the input waveguides of the AWG at the free space coupler interface, etc.).

According to the embodiment described above and shown in the Figures, the upstream wavelengths λu1, λu2, ... λun and the downstream wavelengths λd1, λd2, .... λdn are interleaved.

According to other embodiments not shown in the drawings, the upstream wavelengths λu1, λu2, ... λun and the downstream wavelengths λd1, λd2, ... λdn are comprised in non overlapping wavebands B1 and B2. For instance, the upstream wavelengths λu1, λu2, ... λun may be comprised in the C band, whereas the downstream wavelengths λd1, λd2, ... λdn may be comprised in the L band. Optionally, in the first waveband B1 only the even (or odd) channels are used for upstream transmission, whereas in the second waveband B2 only the odd (or even) channels are used for downstream transmission.

According to the embodiment described above and shown in the Figures, the mux/demux 40 is provided with two user ports UPiu and UPid for each ONU 6i, with transfer functions having respective passing bands at the wavelengths λui and λdi assigned to that ONU 6i.

According to other embodiments not shown in the drawings, the mux/demux 40 is provided with a single user port UPi for each ONU 6i, the ONU 6i and the user port UPi being connected by a single distribution fiber 5i which carries both downstream signal Di and cavity signal Ui'. The ONU 6i comprises at its input a diplexer (e.g. a 1x2 WDM coupler) for separating downstream signals Di directed to the receiver and cavity signals Ui' propagating back and forth within the cavity. If upstream and downstream wavelengths are interleaved as shown in Figure 3, the mux/demux 40 is designed so that each user port UPi has a line transfer function TFLi with a single line passing band PBLi including both wavelengths λui and λdi and a cavity transfer function TFCi having a single cavity passing band PBCi including both wavelengths λui and λdi. Also according to these embodiments, the cavity passing band PBCi and the line passing band PBLi are optimized based on the role they play in the generation of the upstream signal Ui. They accordingly preferably differ by at least one feature including: shape, bandwidth and central wavelength. The same criteria applied to the embodiment described above and shown in the Figures apply. On the other hand, if upstream and downstream wavelengths are comprised in non-overlapping wavebands (e.g. C band and L band), the mux/demux 40 is designed so that each user port UPi has a line transfer function TFLi with two distinct line passing bands at the wavelengths λui and λdi and a cavity transfer function TFCi having two distinct line passing bands at the wavelengths λui and λdi. According to an advantageous variant, this is achieved by implementing the mux/demux 40 by means of a cyclic AWG. According to these embodiments, the cavity passing band and the line passing band at the upstream wavelength λui are optimised based on the role they play in the generation of the upstream signal Ui. They accordingly preferably differ by at least one feature including: shape, bandwidth and central wavelength. The same criteria applied to the embodiment described above and shown in the Figures apply.

Although the above embodiments relate to a colourless transmitter for upstream transmission (where the modulator/amplifier/first mirror are comprised at the ONUs), according to other embodiments not shown in the drawings the same principles are preferably applied for providing a colourless transmitter for downstream transmission. According to these embodiments, the OLT comprises a number n of modulators, amplifiers and first mirrors, a mux/demux with n network ports connected to the n modulators/amplifiers/first mirrors, a line port connected to the remote node through the feeder fiber and a cavity port terminated by a second mirror. This configuration is then symmetric relative to the one shown in Figures 1 and 2. A number n of cavities are formed, each one transmitting at the wavelength selected by the mux/demux as described above. In particular, the mux/demux has a cavity transfer function and a line transfer function for each network port. Both the cavity transfer function and the line transfer function associated to a same network port have a passing band at one of the n downstream wavelengths assigned to the ONUs connected to the OLT. Also according to these embodiments, the passing bands of the cavity transfer function and the line transfer function are individually optimized based on the role they play in the generation of the downstream signal. They accordingly preferably differ by at least one feature including: shape, bandwidth and central wavelength. The same criteria applied to the embodiment described above and shown in the Figures apply.

Furthermore, even though the above embodiments relate to a WDM PON, this is not limiting. Indeed, according to other embodiments not shown in the drawings, the colourless transmitter described above may be used in other types of WDM networks. For instance, it may be used in a WDM ring network, the functions of a ONU 6i and the remote node 3 as described above being implemented within a single node of the WDM ring network.

## Claims

1. An optical transmitter (TX2) comprising:
- a first mirror (624) and a second mirror (41);
- an optical amplifier (623); and
- a wavelength multiplexer/demultiplexer (40) comprising a number n of first user ports (UP1u, UP2u, ... UPnu), a line port (LP) and a cavity port (CP), said wavelength multiplexer/demultiplexer (40) being configured to multiplex first optical signals (U1', U2', ... Un') received through said n first user ports (UP1u, UP2u, ... UPnu) onto said line port (LP) and onto said cavity port (CP), said cavity port (CP) being optically connected to said second mirror (41), a first user port (UPiu) of said number n of first user ports (UP1u, UP2u, ... UPnu) being optically connected to said optical amplifier (623) and said first mirror (624) so as to form a laser cavity delimited by said first mirror (624) and said second mirror (41) and including said optical amplifier (623) and said wavelength multiplexer/demultiplexer (40), wherein said wavelength multiplexer/demultiplexer (40) has a cavity transfer function (TFCi) between said first user port (UPiu) and said cavity port (CP) and a line transfer function (TFLi) between said first user port (UPiu) and said line port (LP),
wherein said wavelength multiplexer/demultiplexer (40) is configured such that said cavity transfer function (TFCi) differs from said line transfer function (TFLi) by at least one spectral feature.

2. The transmitter (TX2) according to claim 1, wherein said cavity transfer function (TFCi) comprises a cavity passing band (BPCi) and said line transfer function (TFLi) comprises a line passing band (BPLi), and wherein said at least one spectral feature comprises one or more of:
- passing band shape;
- passing band bandwidth; and
- passing band central wavelength.

3. The transmitter (TX2) according to claim 2, wherein said line passing band (BPLi) has a shape steeper than said cavity passing band (BPCi).

4. The transmitter (TX2) according to claim 3, wherein said line passing band (BPLi) has a raised-cosine shape and said cavity passing band (BPCi) has a Gaussian shape.

5. The transmitter (TX2) according to any of claims 2 to 4, wherein said line passing band (BPLi) and said cavity passing band (BPCi) are reciprocally shifted.

6. The transmitter (TX2) according to claim 5, wherein said line passing band (BPLi) is red-shifted relative to said cavity passing band (BPCi).

7. The transmitter (TX2) according to any of the preceding claims, wherein said wavelength multiplexer/demultiplexer (40) further comprises n second user ports (UP1d, UP2d, ... UPnd), said wavelength multiplexer/demultiplexer (40) being configured to demultiplex second optical signals (D1, D2, ... Dn) received through said line port (LP) onto said n second user ports (UP1d, UP2d, ... UPnd), a second user port (UPid) of said number n of second user ports (UP1d, UP2d, ... UPnd) being associated to said first user port (UPiu), wherein said wavelength multiplexer/demultiplexer (40) has a further transfer function between said line port (LP) and said second user port (UPid), wherein said wavelength multiplexer/demultiplexer (40) is configured such that said line transfer function (TFLi) differs from said further transfer function by at least one spectral feature.

8. The transmitter (TX2) according to any of the preceding claims, wherein said wavelength multiplexer/demultiplexer (40) comprises an arrayed waveguide grating.

9. The transmitter (TX2) according to claim 8, wherein said arrayed waveguide grating is configured so that a first and second diffraction orders of a first optical signal (Ui') at a wavelength (λui) entering said wavelength multiplexer/demultiplexer (40) through said first user port (UPiu) are focused at said line port (LP) and said cavity port (CP), respectively.

10. The transmitter (TX2) according to any of claim 1 to 7, wherein said wavelength multiplexer/demultiplexer (40) comprises a thin film filter.

11. The transmitter (TX2) according to any of the preceding claims, wherein said second mirror (41) and said wavelength multiplexer/demultiplexer (40) are integrated in a same optical device.

12. The transmitter (TX2) according to any of the preceding claims, wherein said first mirror (624) and said optical amplifier (623) are integrated within a same further optical device.

13. A wavelength multiplexer/demultiplexer (40) comprising a number n of first user ports (UP1u, UP2u, ... UPnu), a line port (LP) and a cavity port (CP), said wavelength multiplexer/demultiplexer (40) being configured to multiplex first optical signals (U1', U2', ... Un') received through said n first user ports (UP1u, UP2u, ... UPnu) onto said line port (LP) and onto said cavity port (CP), wherein said wavelength multiplexer/demultiplexer (40) has a cavity transfer function (TFCi) between a first user port (UPiu) of said number n of first user ports (UP1u, UP2u, ... UPnu) and said cavity port (CP) and a line transfer function (TFLi) between said first user port (UPiu) and said line port (LP), wherein said wavelength multiplexer/demultiplexer (40) is configured such that said cavity transfer function (TFCi) differs from said line transfer function (TFLi) by at least one spectral feature.

14. A wavelength division multiplexing network (1) comprising an optical transmitter (TX2) according to any of claims 1 to 12.

15. A wavelength division multiplexing network (1) comprising a wavelength multiplexer/demultiplexer (40) according to claim 13.
